# EUROPEAN PATENT APPLICATION

(11) **EP 4 659 834 A1**
(43) Date of publication of application: **10.12.2025**
(21) Application number: 24201243.3
(22) Date of filing: 19.09.2024
(51) Int. Cl.: B01D 45/08

(54) **ELIMINATOR AND BLADE OF THE SAME**

(30) Priority: 04.06.2024 KR 20240073094
(71) Applicant: LG Electronics Inc., Yeongdeungpo-gu Seoul 07336 (KR)
(72) Inventor: CHOI, Changyoung, Seoul 08592 (KR)
(74) Representative: Vossius & Partner Patentanwälte Rechtsanwälte mbB

(57) **Abstract**

The present disclosure proposes a blade arranged between a first cover and a second cover, which includes a first end part that guides air inflow, a second end part that guides air outflow, and a guide part connecting the first and second end parts. The first and second end parts are positioned on different lines based on the air inflow direction. This configuration allows for a reduction in the front-to-rear length of the blade, thereby achieving a decrease in the product's weight.

## Description

The present disclosure relates to an eliminator and a blade thereof. The eliminator is capable of reducing the size of an eliminator or improving the performance of a same size eliminator, when used in a heat exchanger.

In general, eliminators are mainly used in air conditioners, air cleaners, cooling towers, or absorption chillers, and remove airborne condensate or contaminated water particles containing dust.

Such an eliminator is configured to have a plurality of blades spaced apart from each other between two covers facing each other so that moisture is filtered out while air passes between each blade. In this regard, reference is made to registered Utility Model No.20-0254476 (Prior Art 1), published Patent No.10-2005-0074843 (Prior Art 2), Published Patent No. 10-2010-0032090 (Prior Art 3), registered Patent No. 10-0717684 (Prior Art 4).

As disclosed in the prior disclosures, each blade of conventional eliminators is formed in a shape that protrudes toward the other blade (e.g., a "V" shape) as it goes toward the center, or a wave shape (e.g., "W" shape) in which a plurality of peaks and valleys are repeated so that air passing between two adjacent blades may pass smoothly, while moisture in the air may be filtered out.

However, the blades of the eliminators according to the above-described prior arts has a long length from the front-to-rear due to the V-shaped or W-shaped design. Accordingly, the conventional eliminators inevitably have a considerable length, which inevitably enlarges the overall product size and raises the manufacturing costs.

Along with this, since the front-to-rear length of the blade is inevitably long, the overall width (surface area) of the blade must also be widened, and the weight becomes heavy, making it difficult to design a compact product.

Meanwhile, conventionally, various moisture collecting structures are additionally provided at the blade to effectively collect moisture from the air passing through the eliminator. For example, as in prior arts 1, 2, and 3, a ring-shaped moisture collecting structure is provided on the surface of the blade so that moisture in the air flowing along the surface of the blade may be filtered by the moisture collecting structure.

However, since the moisture collecting structure provided on the conventional blade, described above, is formed to face the air flow, pressure loss of the air passing between the two blades occurs, which has the disadvantage of preventing smooth air flow.

Furthermore, each blade in the aforementioned prior art is formed to be inclined (or bent) such that the air inlet and outlet sides face opposite directions. This causes inevitable flow resistance due to the abrupt change in direction. Additionally, a disadvantage is that the air flow discharged while passing through the eliminator is inevitably deflected towards the direction of the blade's rear slope.

In addition, conventionally, the weight and size of the product comprising the eliminator increase due to the narrow gap between the blades and the wide width thereof, making it difficult to design a compact product. Furthermore, there is a limit to the weight reduction because a separate structure to support the blades is required or the thickness of the blades has to be increased due to the increase in the weight and size of the blades.

The eliminator according to the present disclosure solves various problems caused by the prior arts described above. The purpose of the present disclosure is to reduce the size (width, front-to-rear length) of each blade to enable the design of a compact eliminator.

Furthermore, the purpose of the eliminator according to the present disclosure is to ensure that the flow direction of the air passing through the eliminator remains the same during the air inflow and outflow.

In addition, the purpose of the eliminator according to the present disclosure is to reduce the overall weight of the eliminator by reducing the weight of the blades.

In addition, the purpose of eliminator according to the the present disclosure is to allow the air to flow smoothly, but to effectively remove the condensed water.

The invention is set out in the appended set of claims. Any references in the following description to embodiments, objects, aspects and/or examples which are not covered by the appended claims are considered as not being part of the present invention.

According to the present disclosure for achieving the above purpose, an eliminator includes a first cover and a second cover that are positioned to be spaced apart from each other while facing each other.

According to the eliminator of the present disclosure, a plurality of blades are disposed to be spaced apart from each other between the first cover and the second cover.

According to the eliminator of the present disclosure, a collecting member provided at each blade may be included to filter moisture in the air passing between each blade.

According to the eliminator of the present disclosure, the blade includes a first end part that guides the inflow of air, a second end part that guides the outflow of air, and a guide part that connects the first end part and the second end part thereof.

According to the eliminator of the present disclosure, the second end part of the blade is located on a different line from the first end part based on the air inflow direction, when viewed in plan view.

According to the eliminator of the present disclosure, the guide part of the blade may be formed as a curved surface.

According to the eliminator of the present disclosure, the second end part of the blade may be bent from the guide part so that air flows out in the same direction as the air flows in.

According to the eliminator of the present disclosure, the first end part and the second end part of the blade may be formed to guide the air flow in the same direction.

According to the eliminator of the present disclosure, the second end part of the blade may be positioned at the rear of the first end parts of the other adjacent blades based on the air inflow direction.

According to the eliminator of the present disclosure, the second end part of the blade may be positioned between the rear of the first end part of the corresponding blade and the rear of first end part of another adjacent blade based on the air inflow direction.

According to the eliminator of the present disclosure, the collecting member may be provided on the outer surface of the guide part of each blade to filter moisture from the air passing between the corresponding blades.

According to the eliminator of the present disclosure, one end of the collecting member may be connected to the outer surface of the guide part forming the blade.

According to the eliminator of the present disclosure, the other end of the collecting member may protrude toward the first end part of another adjacent blade.

According to the eliminator of the present disclosure, the collecting member may protrude from the outer surface of the guide part toward the first end part of another adjacent blade.

According to the eliminator of the present disclosure, the end of the collecting member may be bent toward the second end part of another adjacent blade.

According to the eliminator of the present disclosure, the collecting member may protrude from one end connected to the guide part toward the first end part of another adjacent blade, and then be bent toward the second end part of the adjacent blade.

According to the eliminator of the present disclosure, the collecting member may be positioned at a bent portion in the guide part of another adjacent blade based on the air inflow direction.

According to the eliminator of the present disclosure, the collecting member may be positioned at a rear of the first end part of another adjacent blade based on the air inflow direction.

According to the eliminator of the present disclosure, two or more collecting members may be provided.

According to the eliminator of the present disclosure, a plurality of collecting members may be formed to have different protruding heights.

According to the eliminator of the present disclosure, a first coupling member coupled to each cover may be formed at the first end part of the blade while being bent in a direction opposite to the extending direction of the guide part.

According to the eliminator of the present disclosure, a second coupling member coupled to each cover may be formed at the second end part of the blade while being bent in a direction opposite to the extending direction of the guide part.

According to the eliminator of the present disclosure, the first and second coupling members may be formed by bending in the same direction from each end portion of the blade.

According to the eliminator of the present disclosure, the blade may be arranged to form a plurality of rows along the air flow direction.

According to the eliminator of the present disclosure, among the blades in each row, the first end part of a blade in the rear row may be positioned at a rear of the second end part of a blade in the front row based on the air inflow direction.

According to the eliminator of the present disclosure, among the blades in each row, the second end part of a blade in the rear row may be positioned at a rear of the first end part of a blade in the front row based on the air inflow direction.

According to the eliminator of the present disclosure, among the blades in each row, the second end part of the blade in the rear row may be positioned between the rear of the first end part of a blade in the front row and the rear of the first end part of another blade in the front row based on the air inflow direction.

According to the eliminator of the present disclosure, among the blades in each row, the first end part of a blade in a rear row blade may be positioned between the rear of the second end part of a blade in the front row and the rear of the second end part of another blade in the front row based on the air inflow direction.

According to the blade of the eliminator of the present disclosure for achieving the purposes, the interval between the first end parts and the interval between the second end parts of each of the blades are the same. The guide part of each blade may be formed to be gradually adjacent to the guide part of another adjacent blade from the first end part to the second end part, and then gradually move away from the guide part of another adjacent blade while passing through the bent portion.

According to the blade of the eliminator of the present disclosure, the collecting member for filtering moisture in the air may protrude from the outer surface of the guide part while guiding the air flowing along the surface of the guide part to flow along the surface of another adjacent blade.

According to the blade of the eliminator of the present disclosure, the collecting member may be formed at the bent portion in the guide part of each blade.

According to the blade of the eliminator of the present disclosure, the bent portion of the collecting member may be any one part between the rear of the first end part of a blade and the front of the second end part of another blade.

According to the blade of the eliminator of the present disclosure for achieving the purposes, the blade is formed of a plate and includes one end defined as a first end part, the other end defined as a second end part, and a guide part defined as the part between the first end part and the second end part. The second end part may be bent from the guide part to guide the outflow of air in the same direction as the air inflow direction into the first end part.

As described above, an eliminator of the present disclosure has the following various effects.

A first end part and a second end part of a blade of the eliminator of the present disclosure are formed to be positioned on different lines based on the air inflow direction. Therefore, the front-to-rear length of the blade may be minimized.

The eliminator of the present disclosure may have a guide part formed to have a curved surface. Therefore, the eliminator of the present disclosure may minimize pressure loss due to rapid air flow.

In addition, since the second end part provided on the air outflow side of the blade is formed to face the same or similar direction as the air inflow direction of the blade, the problem of the outflow air being deflected to either side of the eliminator may be prevented.

In addition, the eliminator of the present disclosure enables moisture in the air to be efficiently filtered by the edge between a collecting member and a connecting part, and the air hitting the collecting member flows smoothly over the curved surface of the collecting member without a sudden interruption.

In addition, in eliminator of the present disclosure, moisture passing through the collecting member flows through the inner surface of the guide part of another adjacent blade and then is collected on the inner surface of a second coupling member.

### BRIEF DESCRIPTION OF THE DRAWINGS

FIG. 1 is a combined perspective view of an eliminator according to an embodiment of the present disclosure.
FIG. 2 is an exploded perspective view of the eliminator according to an embodiment of the present disclosure.
FIG. 3 is an enlarged view of part "A" of FIG. 2.
FIG. 4 is an enlarged view of part "B" of FIG. 2.
FIG. 5 is an enlarged view of part "C" of FIG. 2.
FIG. 6 is a front view of the eliminator according to an embodiment of the present disclosure.
FIG. 7 is a cross-sectional view taken along line A-A of FIG. 6.
FIG. 8 is a plan view of a second cover of the eliminator according to an embodiment of the present disclosure.
FIG. 9 is a perspective view of a blade of the eliminator according to an embodiment of the present disclosure.
FIG. 10 is a plan view of the blade of the eliminator according to an embodiment of the present disclosure.
FIG. 11 is a plan view of another example of the eliminator blade according to an embodiment of the present disclosure.
FIG. 12 is an enlarged view of a main part for explaining an arrangement structure for the blade of the eliminator according to an embodiment of the present disclosure.
FIG. 13 is an enlarged view of a main part of another example for explaining an arrangement structure for the blade of the eliminator according to an embodiment of the present disclosure.
FIGS. 14 to 17 are enlarged views of major parts for each embodiment in a state in which the blades of the eliminator are disposed to overlap each other according to an embodiment of the present disclosure.
FIG. 18 is a plan view of the blade in a state where a plurality of collecting members of the eliminator are provided according to an embodiment of the present disclosure.

### DESCRIPTION OF THE DRAWINGS

Embodiments of the present disclosure will be described with reference to exemplary drawings. It should be noted that in adding reference numerals to components of each drawing, the same numerals are provided as much as possible even though they are displayed on different drawings.

Furthermore, in describing an embodiment of the present disclosure, if it is determined that a detailed description of a related known configuration or function interferes with the understanding of an embodiment of the present disclosure, the detailed description thereof is omitted.

Additionally, when describing the components of an embodiment of the present disclosure, terms such as first, second, A, B, (a), and (b) may be used. These terms are only used to distinguish the component from other components, and the essence or order of the component is not limited by the term. When a component is described as being "connected" or "coupled" to another component, that component may be directly connected to that other component, it should be understood that another component may be "connected" or "coupled" between each component.

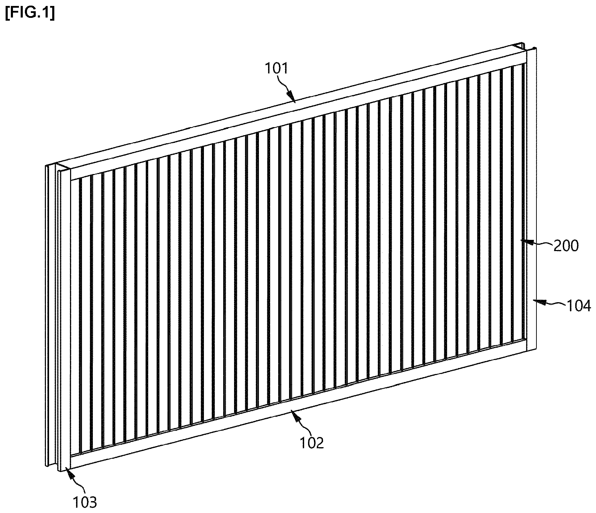

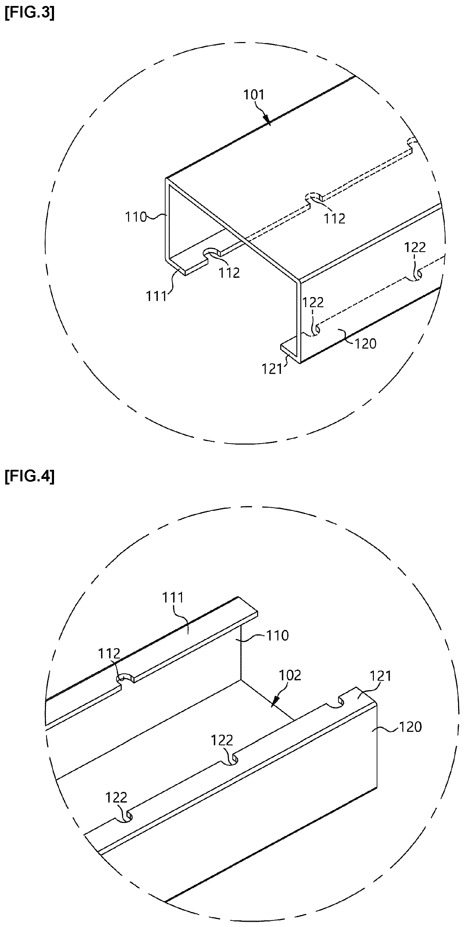

Hereinafter, preferred embodiments for an eliminator and a blade thereof of the present disclosure will be described with reference to FIGS. 1 to 18.

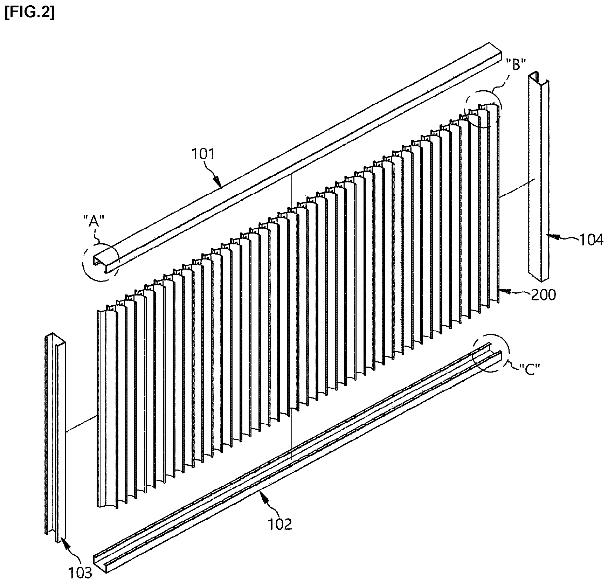

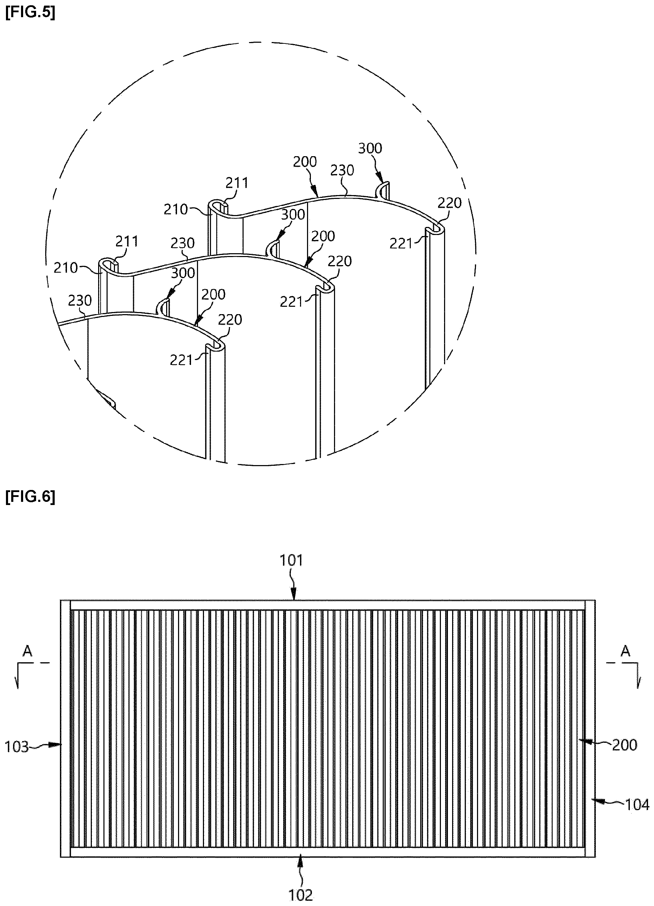

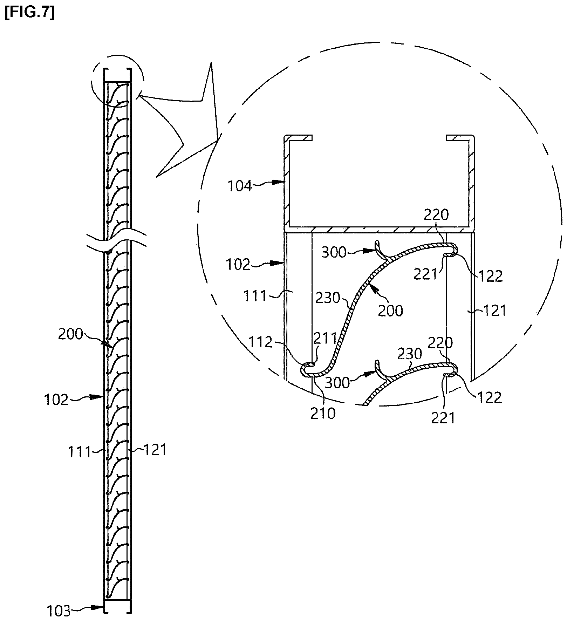

The attached FIG. 1 is a combined perspective view of the eliminator according to an embodiment of the present disclosure, and FIG. 2 is an exploded perspective view of the eliminator, FIG. 6 is a front view of the eliminator, and FIG. 7 is a cross-sectional view of a plane side of the eliminator according to an embodiment of the present disclosure.

As shown in these drawings, the eliminator according to an embodiment of the present disclosure is formed into a gently curved surface in which the blade 200 is not rapidly bent, so that the size of the blade 200 may be reduced and deflection of air passing through the eliminator may be prevented.

Hereinafter, the eliminator according to an embodiment of the present disclosure will be described in more detail for each configuration with reference to each of the drawings.

First, the eliminator according to an embodiment of the present disclosure includes a first cover 101 and a second cover 102.

The two covers 101, 102 are provided for the installation of a blade 200 to be described later. That is, a plurality of blades 200 may be installed on the two covers 101, 102, respectively.

The two covers 101, 102 may be disposed to be spaced apart from each other while facing each other. For example, the two covers 101, 102 may be disposed to be spaced apart from each other while facing up and down. For convenience of description, among two covers 101, 102, a cover positioned at an upper side may be defined as a first cover 101, and a cover positioned at a lower side may be defined as a second cover 102.

Each of the covers 101, 102 may be disposed in a direction perpendicular to a flow direction of air. That is, a longitudinal direction of each of the covers 101, 102 is positioned perpendicular to a flow direction of air.

Each of the covers 101, 102 may be formed as an angular tube in which a flat plate is bent in multiple stages. For example, as shown in FIGS. 2 to 4, each of the covers 101, 102 may be formed in a structure having a front wall 110 and a rear wall 120 based on the air inflow direction. In this case, while opposing surfaces of the two covers 101, 102 are formed to be open, and both ends of the blade 200 to be described later (in a direction perpendicular to a first end part and a second end part) may be installed to be inserted between the front wall 110 and rear wall 120 of each of the covers 101, 102.

A first bent end 111 bent toward the rear wall 120 is formed on the front wall 110 constituting each of the covers 101, 102, and a second bent end 121 bent toward the front wall 110 is formed on the rear wall 120. In addition, a plurality of coupling grooves 112, 122 are formed in the first bent end 111 and the second bent end 121 so that the first end part 210 and the second end part 220 of the blade 200, which will be described later, may be inserted and coupled, respectively. Accordingly, both ends of the blade 200 may be maintained in a correct position while the first end part 210 and the second end part 220 are inserted into the coupling grooves 112, 122, respectively.

Each of the coupling grooves 112, 122 may be formed at each of the first bent end 111 and the second bent end 121 while having a predetermined interval.

For example, as shown in FIGS. 7, 8 and 12, each of the coupling grooves 112, 122 may be formed to be positioned on the same first line L1 with respect to the air inflow direction when the covers 101, 102 are viewed from a plane surface (or bottom surface). For example, the rear side coupling groove 122 may be positioned on the first line L1 extending from the air inflow direction of the front side coupling groove 112. As a result, the second end part 220 of the blade 200 in which both ends are coupled to the corresponding two coupling grooves 112, 122 is positioned at the rear of the first end part 210 of the other blade 200 when viewed from the air inflow direction.

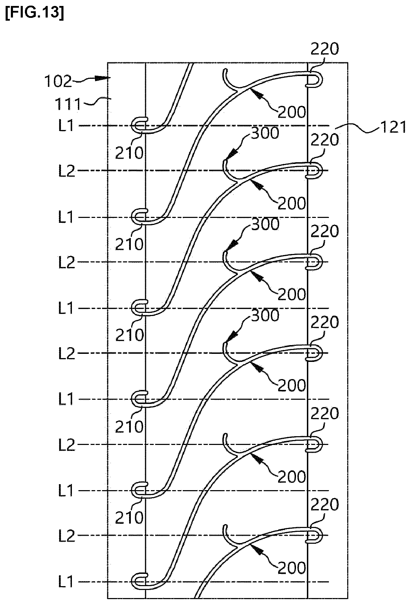

As another example, as shown in FIG. 13, each of the coupling grooves 112, 122 may be formed to be positioned on different lines L1, L2 based on the air inflow direction when the covers 101, 102 are viewed in a plain surface (or bottom surface). For example, the rear side coupling groove 122 may be positioned on the second line L2 different from the first line L1 extending in the horizontal direction from the front side coupling groove 112. Accordingly, the second end part 220 of the blade 200 in which both ends are coupled to the two coupling grooves 112 and 122 is positioned between the rear portion of the first end part 210 of the corresponding blade 200 and the rear portion of first end part 210 of another blade 200 when viewed from the air inflow direction.

Next, the eliminator of an embodiment of the present disclosure includes a plurality of blades 200.

The blade 200 is positioned between the first cover 101 and the second cover 102 to guide the flow of air passing between the first cover 101 and the second cover 102. More specifically, the blade 200 may have upper and lower ends positioned on the first cover 101 and the second cover 102, respectively. For example, as shown in FIG. 2, the upper end of the blade 200 is positioned on the first cover 101 arranged at the upper side, and the lower end of the blade 200 is positioned on the second cover 102 arranged at the lower side.

The plurality of blades 200 are positioned to be spaced apart from each other along the longitudinal direction (left and right directions based on FIG. 6) of each of the covers 101, 102. Accordingly, the air passing between the two covers 101, 102 may pass between each of the blades 200.

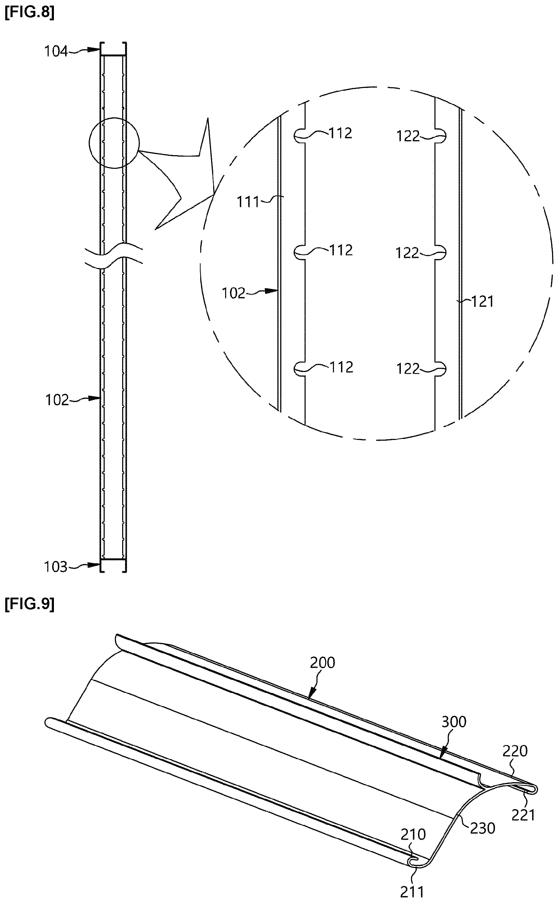

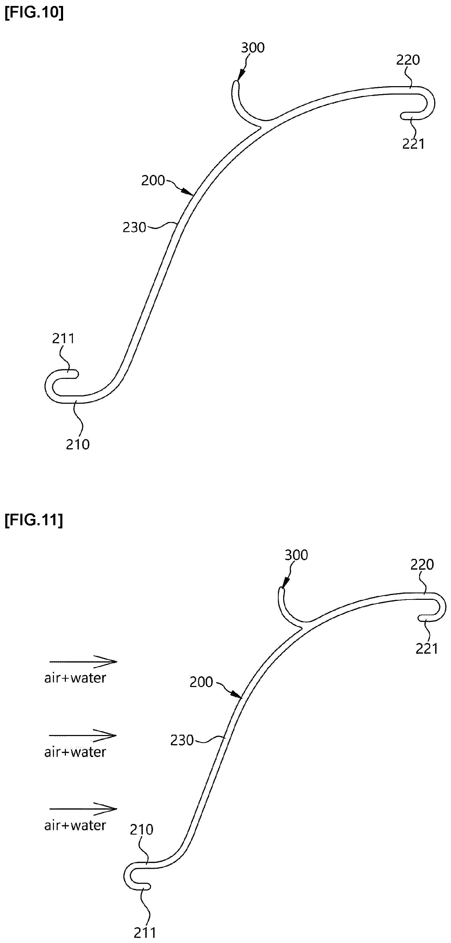

The blade 200 includes a first end part (front end) 210 guiding the inflow of air, a second end part (rear end) 220 guiding the outflow of air, and a guide part 230 connecting the first end part 210 and the second end part 220 as shown in FIGS. 9 and 10.

The plurality of blades 200 are arranged at the same interval between the first end parts 210 and the interval between the second end parts 220. In addition, the guide part 230 of each blade 200 may be formed to be gradually adjacent to the guide part 230 of another adjacent blade 200 from the first end part 210 to the second end part 220, and may be formed to gradually move away from the guide part 230 of another adjacent blade 200 while passing through a bent portion.

The bent portion may be a portion of the guide part 230 having the smallest radius of curvature. In particular, in an embodiment of the present disclosure, the bent portion may be defined as any one portion between the rear side of the first end part 210 of any one blade 200 and the front side of the second end part 220 of the other blade 200. The bent portion is formed to form a curved surface having an angle greater than 90°.

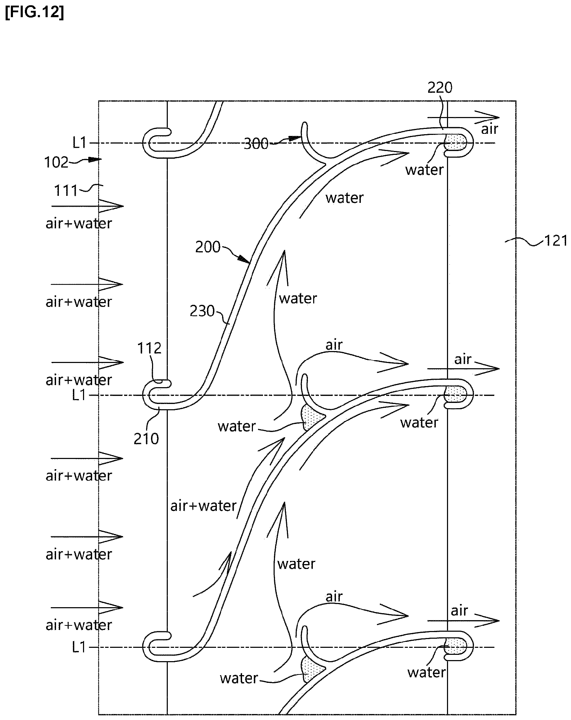

The blade 200 according to an embodiment of the present disclosure is formed such that the first end part 210 and the second end part 220 are positioned on different lines L1 and L2, respectively, based on the air inflow direction (refer to FIG. 12), when viewed in a plan view. For example, the blade 200 may be positioned (or formed) to be inclined from the first end part 210 to the second end part 220 so as to deviate from the first line L1 passing through the first end part 210.

In addition, the second end part 220 of one blade 200 may be positioned on the first line L1 passing through the first end part 210 of the other blade 200 (refer to FIG. 12), or may be positioned (or formed) more biased from the first line L1 to the second line L2 where the second end part of the other blade 200 is located.

As such, the air introduced between the first end part 210 of each blade 200 may flow under the guidance of at least a part of the guide part 230 of each blade 200. That is, it is prevented from being directly discharged between the second end parts 220 of each blade 200 without being guided by the guide part 230 so that moisture in the air may be removed while passing each blade 200.

In addition, the guide part 230 may be formed such that air flows only in the forward direction from the first end part 210 to the second end part 220. In this case, the guide part 230 of the blade 200 may be formed as a gentle curved surface that is not rapidly bent.

That is, the guide part 230 is formed to have a gentle curved surface, thereby minimizing flow loss caused by rapidly changing the direction of the air passing through the guide part 230. For example, the guide part 230 may be formed to form an angle larger than 90° even at the most rapidly bent portion.

Of course, at least a portion of the guide part 230 may be formed as a flat surface. For example, at least a portion from the connection portion with the first end part 210 to the bent portion may be formed as a flat surface.

In particular, when the guide part 230 of the blade 200 is formed to be rapidly bent as in the conventional structure, the total length (front-to-rear length) of the blade 200 is inevitably lengthened. This inevitably increases the weight of the blade 200 and the manufacturing cost. In consideration of this, the guide part 230 is formed to have a gentle curved surface, thereby minimizing the front-to-rear length of the blade 200 and reducing the weight.

In addition, the second end part 220 of the blade 200 may be formed to guide air to flow out in the same direction as the air inflow direction. That is, when viewed in a plan view, the second end part 220 of the blade 200 may be bent from the guide part 230 so that air flows out in the same direction as the direction in which the air flows into the first end part 210 of the blade 200. With this structure, it is possible to prevent the problem that the air passing through the eliminator is deflected to either side of the eliminator.

The second end part 220 of the blade 200 may be formed to have a minimum curvature (to minimize bending), or at least a part of the second end part 220 may be formed to form a plane.

In addition, when viewed in a plan view, the first end part 210 of the blade 200 may also be formed in the same direction and the same curvature as the second end part 220 of the blade 200. That is, the first end part 210 and the second end part 220 of the blade 200 are formed to guide the air flow in the same direction. As a result, while air flows into the first end part 210 of the blade 200 and then flows out to the second end part 220 of the blade 200, it is possible to flow smoothly in the forward direction without a sudden direction change. That is, it is possible to minimize the pressure loss generated while air passes through the eliminator.

Meanwhile, coupling members 211 and 221 for coupling with the covers 101, 102 may be formed at the first end part 210 and the second end part 220 of the blade 200, respectively. For example, a first coupling member 211 is formed at the first end part 210 of the blade 200, and a second coupling member 221 is formed at the second end part 220 of the blade 200.

Each of the coupling members 211, 221 is fitted into coupling grooves 112, 122 formed at each bent end 111, 121 of each of the covers 101, 102 to be coupled.

Each of the coupling members 211, 221 may be formed by bending (for example, 180° bending) each end 210 and 220 of the blade 200 in the reverse direction. For example, the first coupling member 211 is formed by bending the first end part 210 of the blade 200 in the reverse direction, and the second coupling member 221 is formed by bending the second end part 220 of the blade 200 in the reverse direction.

The end of each coupling member 211, 221 and each end 210, 220 of the blade 200 are formed to be spaced apart from each other by a predetermined distance. For example, each end 210, 220 of the blades 200 and the end of each coupling member 211, 221 may be formed into an approximately "U" shape.

Each of the coupling members 211 and 221 may be formed by being bent from each of the ends 210 and 220 in different directions. For example, when viewed from the drawing, the first coupling members 211 may be bent upward from first end part 210 of the blade 200 and then bent again in the reverse direction (rearward), and the second coupling member 221 may be bent downward from the second end part 220 of the blade 200 and then bent again in the reverse direction (forward direction).

Of course, as shown in FIG. 11, the first coupling member 211 may be formed by bending downward from the first end part 210 of the blade 200 and then bending again in a reverse direction (rear direction).

In the case of the second coupling member 221, the second coupling member 221 may be formed to be bent toward another blade 200 which guides air to flow toward the corresponding blade 200. For example, the second coupling member 221 of the blade 200 which is positioned relatively above when viewed from the drawing may be bent downward and then bent again in a reverse direction (forward direction). Due to the shape of the second coupling member 221, moisture flowing through the inner surface of the blade 200 is blocked and filtered by the second coupling member 221 to prevent leakage to the rear of the eliminator.

Meanwhile, the eliminator of the present embodiment may further include a collecting member 300. That is, the collecting member 300 allows the moisture contained in the air to be collected and removed while the air flows along the surface of the blade 200 while passing through the eliminator.

The collecting member 300 may be provided on an outer surface (a surface facing a blade in the upper side) of the guide part 230 forming the blade 200 and may act to filter moisture from the air passing between two adjacent blades 200. More specifically, the collecting member 300 may be formed in a bent portion of the guide part 230. The bent portion may be any one portion between the rear side of the first end part 210 of any one blade 200 and the front side of the second end part 220 of the other blade 200, or a portion of the guide part 230 having the smallest radius of curvature as described above.

The collecting member 300 may be formed so that one end is connected to the outer surface of the guide part 230 and the other end protrudes toward the first end part 210 of the adjacent blade 200 while being spaced apart from the guide part 230. That is, unlike the structure of the prior art, the collecting member 300 is bent in a forward direction with respect to the flow direction of air so that air may pass through.

Meanwhile, the collecting member 300 may be manufactured and formed as a single body with the blade 200, or may be manufactured separately and then integrated by fastening or welding.

In addition, the collecting member 300 may be formed to guide the air flow to the other blade 200. That is, even if the air flowing along one blade 200 passes through the collecting member 300 and hits the collecting member 300, it is possible to continuously flow out smoothly under the guidance of the other blade 200.

To this end, the other end of the collecting member 300 may be bent toward the second end part 220 of the adjacent blade 200. For example, the curved surface formed by the other end of the collecting member 300 may be formed to face the rear inner surface (a surface facing the blade in the lower side in the drawing) of the guide part 230 of the blade 200. This structure is to allow the air flowing along the surface (outer surface of the guide part) of the blade 200 to pass while minimizing the occurrence of eddy currents even if it hits the collecting member 30. In this case, the air hitting the collecting member 300 may be moved toward the second end part 220 of the other blade 200 along the curved surface formed by the other end of the collecting member 300 and then smoothly flow along the inner surface of the second end part 220.

For example, as shown in FIG. 12, the collecting member 300 protrudes from first end part connected to the outer surface of the guide part 230 toward the front side of the guide part 230 of the adjacent blade 200. Thereafter, the collecting member 300 may be formed to be bent toward the second end part toward the rear side of the guide part 230 of the blade 200.

In addition, the collecting member 300 may be positioned between the first end part 210 and the second end part 220 of the adjacent blade 200 based on the air inflow direction. More specifically, when viewed from the direction in which air is introduced, the collecting member 300 may be positioned on the same first line (rear) as the first end part 210 of the adjacent blade 200, or may be positioned so as not to be seen by being covered by the first end part 210.

Meanwhile, the eliminator of an embodiment of the present disclosure may further include two end plates 103 and 104 which are provided around the sides. That is, the two end plates 103 and 104 and the two covers 101 and 102 form the four circumferences of the eliminator.

Air passing through the outermost blade 200 of each blade 20 is prevented from flowing to the side of the eliminator due to the two end plates 103, 104.

The two end plates 103, 104 may be formed of a flat plate material, or may be formed of a square tube or a bar.

In an embodiment of the present disclosure, for example, the end plates 103, 104 are formed by bending the plate in multiple stages. That is, the end plates 103, 104 are capable of minimizing bending deformation by forming the plate into a square tube.

Next, the assembly process of the present disclosure is described.

First, the first cover 101 and the second cover 102 are positioned to face each other. In this case, each of the covers 101 and 102 is positioned so that the bent ends 111 and 121 face each other (e.g., positioned so as to face each other vertically). That is, the first bent end 111 and the second bent end 121 of the first cover 101 are positioned so as to face the first bent end 111 and the second bent end 121 of the second cover 102.

Next, a plurality of blades 200 are respectively coupled to the two covers 101 and 102. In this case, the first end part 210 of each of the blades 200 is positioned at a front side (air inlet side) between the two covers 101 and 102, and the second end part 220 is positioned at a rear side (air outlet side) between the two covers 101 and 102.

The upper portions of the first end part 210 and the second end part 220 forming each blade 200 are coupled to the coupling grooves 112 and 122 formed at the two bent ends 111 and 121 of the first cover 101, respectively. The lower portions of the first end part 210 and the second end part 220 forming each blade 200 are coupled to the coupling grooves 112 and 122 formed at the two bent ends 111 and 121 of the second cover 102, respectively.

Each blade 200 is arranged to be inclined to one side from the first end part 210 to the second end part 220 when viewed in a plan view. That is, the line connecting the first end part 210 and the second end part 220 of each blade 200 is formed to be inclined without being parallel to the air inflow direction. For example, when viewed in a plan view, the second end part 220 of the blade 200 positioned at the lower side of the drawing may be arranged to be positioned on the same line in the front-rear direction as the first end part 210 of the blade 200 positioned at the upper side.

And, when the installation of each blade 200 is completed, the two end plates 103 and 104 are coupled to both sides of the two covers 101 and 102, respectively. In this case, the upper and lower ends of the two end plates 103 and 104 are coupled to both sides of the two covers 101 and 102 by fastening, attaching, or welding, respectively.

The assembly (manufacturing) of the eliminator may be completed by the above process.

Next, the operation of the eliminator according to an embodiment of the present disclosure will be described.

First, the eliminator is provided on a path through which air flows to block the flow of air.

The air flows into the air inlet side (front) of the eliminator and flows out to the air outlet side (rear).

While the air passes through the eliminator, the air is introduced between the first end parts 210 of each blade 200 of the eliminator. Subsequently, the air flows along the surface (curvature) formed by the guide part 230 while hitting the guide part 230 of each blade 200.

In addition, while the air flows along the surface of the guide part 230, it collides with the collecting member 300 protruding from the guide part 230. Accordingly, moisture contained in the air collides with the collecting member 300 and is collected at the edge where the collecting member 300 and the blade 200 are connected, and when such moisture accumulates by a certain size or more, it is removed while flowing down to the second cover 102 by gravity.

In addition, the air hitting the collecting member 300 flows to the second end part 220 of the blade 200 while crossing the outer surface of the guide part 230 of the collecting member 300, and then flows out rearward under the guidance of the second end part 220. In this case, since the second end part 220 of the blade 200 is bent from the guide part 230 to face approximately the same or similar direction as the air inflow direction, the air passing through the eliminator above may flow smoothly in the direction of the eliminator without being deflected to either side of the eliminator.

Meanwhile, while the air hits the collecting member 300, some of the moisture contained in the air exceeds the collecting member 300. In this process, unlike air, the moisture flows through the inner surface of the guide part 230 while splashing to the inner surface of the guide part 230 (the surface where the blade of the collecting member faces) of the adjacent blade 200 by inertia. Thereafter, the moisture flows into the second coupling member 221 of the blade part 220 extending from the guide part 230 and is blocked by the second coupling member 221 and flows down along the second coupling member 221.

Accordingly, the air passing through the eliminator may pass smoothly by the above-described process, and moisture in the air may be sufficiently filtered.

As described above, in the eliminator according to an embodiment of the present disclosure, since the first end part 210 and the second end part 220 constituting the blade 200 are formed to be positioned on different lines based on the air inflow direction, the front-to-rear length of the blade 200 may be minimized. Accordingly, it is possible to reduce the weight and the manufacturing cost of the blade 200.

In addition, in the eliminator according to an embodiment of the present disclosure, since the guide part 230 is formed with a gentle curved surface, it may minimize pressure loss due to a sudden change in the direction of air flow.

In addition, since the second end part 220 provided on the air outlet side of the blade 200 is formed to face the same or similar direction as the air inflow direction, the problem of the flowing air being deflected to either side of the eliminator may be prevented.

In addition, the eliminator according to an embodiment of the present disclosure is formed such that an edge is created at the connection portion between the collecting member 300 and the blade 200. Accordingly, even if the collecting member 300 is formed in a convex structure toward the air inflow direction, moisture in the air may be filtered by the edge.

In addition, since the collecting member (300) is formed in a convex structure toward the inflow direction of air, air flows smoothly without a sudden break.

In addition, in the eliminator according to an embodiment of the present disclosure, moisture not collected at the edge between the collecting member 300 and the blade 200 and passing through the collecting member 300 flows through the inner surface of the guide part 230 of another adjacent blade 200 thereto and then is collected on the inner surface of the second coupling member 221. Accordingly, the efficiency of removing moisture may be further improved.

Meanwhile, the eliminator according to an embodiment of the present disclosure may be implemented in various forms other than the above-described embodiment.

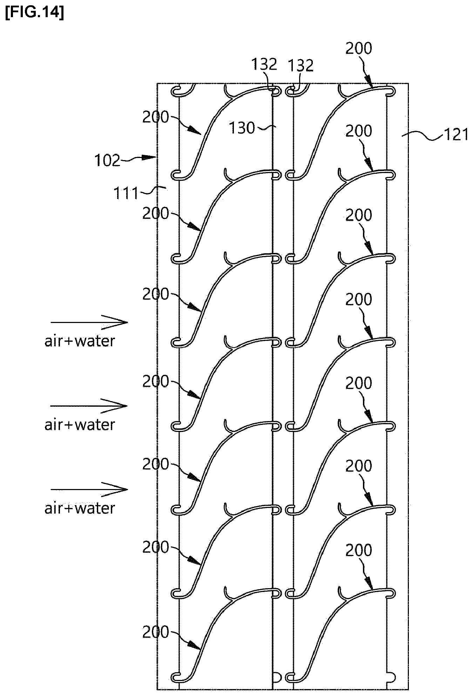

For example, as shown in FIGS. 14 to 17, each blade 200 constituting the eliminator may be arranged in a plurality of overlapping structures. That is, when the amount of moisture to be filtered out of the eliminator is large or the flow rate of air passing through the eliminator is high, each blade 200 may be arranged to overlap along the air flow direction.

When each of the blades 200 is arranged to overlap each other, an installation wall 130 may be additionally provided between the front wall 110 and the rear wall 120 on each of the covers 101 and 102. In addition, a third bent end 131 having a coupling groove 132 is provided on the installation wall 130.

The coupling groove 132 of the third bent end 131 is formed so that the second end part 220 of one blade 200 positioned in the front and the first end part 210 of the other blade 200 positioned in the rear may be coupled in the front and rear, respectively.

In particular, each blade 200 overlapping the front and rear may be arranged in various forms.

As an example, as shown in FIG. 14, the first end part 210 of the rear blade 200 may be arranged side by side so as to be continuous with each other on the second end part 220 of the front blade 200.

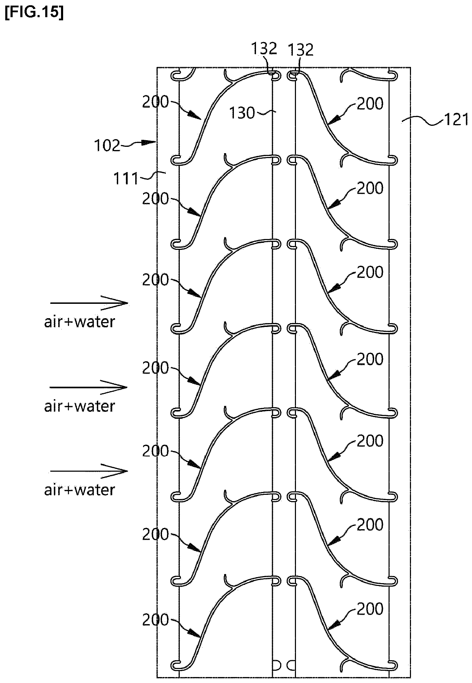

As another example, as shown in FIG. 15, the first end part 210 of the rear blade 200 may be disposed side by side at the rear of the second end part 220 of the front blade 200, and the front blade 200 and the rear blade 200 may be arranged in a structure in which the front and rear are symmetrical to each other.

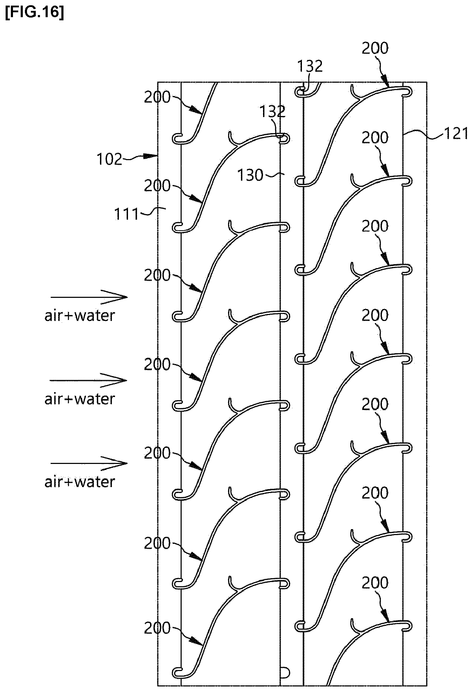

As another example, as shown in FIG. 16, the first end part 210 of the rear blade 200 may be misaligned on the second end part 220 of the front blade 200 so as not to be continuous with each other. For example, the first end part 210 of any one rear blade 200 may be disposed to be positioned between the second end parts 220 of the front two blades 200.

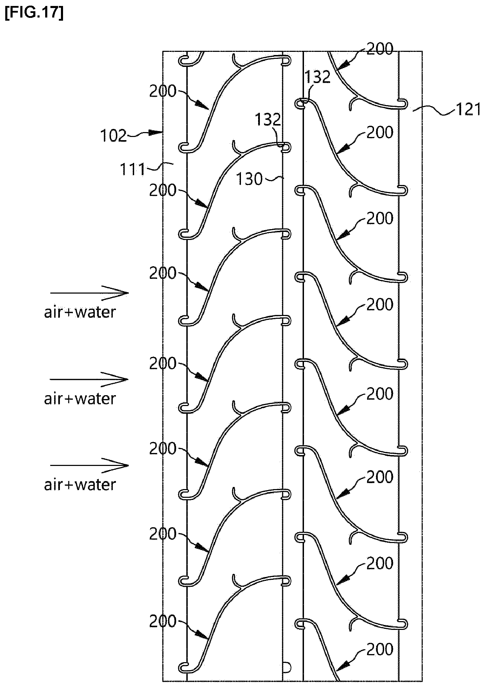

As another example, as shown in FIG. 17, the first end part 210 of the rear blade 200 may be misaligned on the second end part 220 of the front blade 200 so as not to be continuous with each other, and the front blade 200 and the rear blade 200 may be arranged in a structure symmetrical to each other.

Next, the blade 200 constituting the eliminator according to an embodiment of the present disclosure may be implemented in a different form from the above-described embodiment.

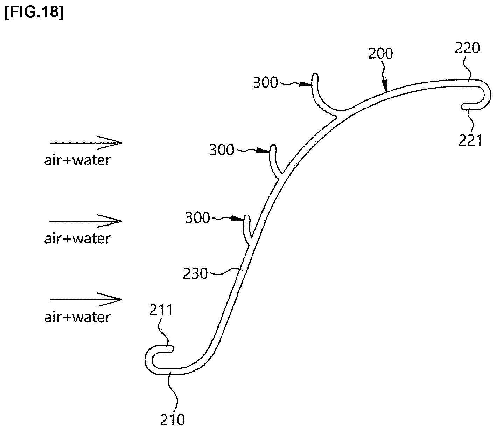

For example, as illustrated in FIG. 18, two or more collecting members 300 may be provided in one blade 200. That is, when the eliminator according to an embodiment of the present disclosure is used in a place where a large amount of moisture is included in air, a plurality of collecting members 300 may be provided in one blade 200 to sufficiently remove the moisture.

When a plurality of collecting members 300 are provided on one blade 200 in this way, each collecting member 300 may be formed to have different protruding heights. For example, the collecting member 300 having a relatively low height may be disposed on the front side.

Also, when a plurality of collecting members 300 are provided on one blade 200, each collecting member 300 may be formed to have different protruding angles. For example, the collecting member 300 disposed relatively in front may be formed to protrude from the surface of the guide part 230 while having a smaller inclination angle.

Next, although not illustrated, the eliminator according to an embodiment of the present disclosure may be formed such that an interval between the blades 200 on the air inlet side (an interval between the first end parts) and an interval between the blades 200 on the air outlet side (an interval between the second end parts) are different.

For example, an interval between first end parts 210 of the blades 200 may be formed to be narrower than an interval between the second end parts 220 of the blades 200. In this case, the flow speed of the inflow air may increase.

Meanwhile, the blade 200 constituting the eliminator according to an embodiment of the present disclosure may be applied to various types of eliminators. That is, the blade 200 of the present disclosure may be applied to an eliminator having a different shape (or a different type) from the eliminator of the above-described embodiment.

The first end part 210 and the second end part 220 of the blade 200 constituting the eliminator of the present disclosure are positioned on different lines based on the air inflow direction, and the guide part 230 may be formed to have a gentle curved surface.

In addition, the second end part 220 of the blade 200 constituting the eliminator according to an embodiment of the present disclosure may be bent from the guide part 230 to guide the air outflow in the same as the direction in which the air flows into the first end part 210.

In addition, the blade 200 constituting the eliminator according to an embodiment of the present disclosure preferably includes the collecting member 300, but does not necessarily have to be provided in the shape of the above-described embodiment. That is, even if the collecting member 300 is provided, the shape of the collecting member 300 may be variously modified.

In addition, in the eliminator according to an embodiment of the present disclosure, positions of the covers 101 and 102 may be differently disposed according to the structure. For example, the first cover 101 and the second cover 102 may be disposed in a structure facing both sides. In this case, one end plate 103 may be disposed to face upward and the other end plate 104 may be disposed to face downward.

As such, the eliminator according to an embodiment of the present disclosure may be implemented in various forms.

In the above, just because all components constituting an embodiment according to the present disclosure are combined or described to operate in combination, the present disclosure is not necessarily limited to the above embodiment. That is, within the scope of the object of the present disclosure, all of the components may be selectively combined and operated in one or more. In addition, terms such as "inclusive," "construct," or "have" described above mean that the component may be inherent unless otherwise stated in opposition, and should be construed as being able to further include other components rather than excluding the other components. All terms, including technical or scientific terms, have the same meaning as those generally understood by those of ordinary skill in the art to which the present disclosure belongs unless otherwise defined. Commonly used terms, such as predefined terms, should be construed as consistent with the contextual meaning of the relevant technology and are not construed as ideal or excessively formal unless clearly defined in the present disclosure.

The above description is merely an illustrative explanation of the technical idea of the present disclosure, and various modifications and modifications may be made without departing from the essential characteristics of the present disclosure. Therefore, the embodiments disclosed in the present disclosure are not intended to limit the technical idea of the present disclosure, but to explain, and the scope of the technical idea of the present disclosure is not limited by these embodiments. The scope of protection of the present disclosure should be interpreted by the following claims, and all technical ideas within the equivalent scope should be interpreted as being included in the scope of the present disclosure.

## Claims

1. An eliminator comprising:
a first cover (101) and a second cover (101) that are provided to be spaced apart from each other while facing each other;
a plurality of blades (200) provided between the first cover (101) and the second cover (102) to be spaced apart from each other,
wherein each blade (200) of the plurality of the blades (200) includes:
a first end part (210) that is configured to guide an inflow of air;
a second end part (220) that is configured to guide an outflow of air, and,
a guide part (230) that connects the first end part (210) and the second end part (220),
wherein the second end part (220) is positioned on a line different from the first end part (220) based on the air inflow direction, when viewed in a plan view.

2. The eliminator according to claim 1, wherein the guide part (230) is formed to have a curved surface.

3. The eliminator according to claim 1 or claim 2, wherein the second end part (220) of the blade (200) is bent from the guide part (230) so that the air flows out in the same direction as the air inflow direction.

4. The eliminator according to any one of claims 1 to 3, wherein the first end part (210) and the second end part (220) of the blade (200) are formed to guide the air flow in the same direction.

5. The eliminator according to any one of claims 1 to 4, wherein the second end part (220) of the blade (200) is positioned at the rear of respective first end parts of other adjacent blades, based on the air inflow direction

6. The eliminator according to any one of claims 1 to 4, wherein the second end part (220) of the blade (200) is positioned between the rear of a first end part of the corresponding blade and the rear of a first end part of another adjacent blade, based on the air inflow direction.

7. The eliminator according to any one of claims 1 to 6, wherein a first coupling member (211) coupled to each cover (101, 102) is formed at the first end part (210) of the blade (200) while being bent in a direction opposite to the extending direction of the first end part (210), and
wherein a second coupling member (221) coupled to each cover (101, 102) is formed at the second end part (220) of the blade (200) while being bent in a direction opposite to the extending direction of the second end part (220).

8. The eliminator according to claim 7, wherein the first and second coupling members (211, 221) are formed by bending in the same direction from each respective end part of the blade (200).

9. The eliminator according to any one of claims 1 to 8, wherein the blade (200) is arranged to form a plurality of rows along the air flow direction.

10. The eliminator of claim 9, wherein among the blades (200) in each row, a first end part (210) of a blade (200) in a rear row is positioned at the rear of a second end part (220) of a blade (200) in a front row, based on the air inflow direction.

11. The eliminator of claim 9, wherein among the blades (200) in each row, a second end part (220) of a blade (200) in a rear row is positioned at the rear of a first end part (210) of a blade (200) in the front row, based on the air inflow direction.

12. The eliminator of claim 9, wherein among the blades (200) in each row, a second end part (220) of a blade (200) in a rear row is positioned between the rear of a first end part (210) of a blade (200) in a front row and the rear of a first end part (210) of another blade in the front row, based on the air inflow direction.

13. The eliminator of claim 9, wherein among the blades (200) in each row, a first end part (210) of a blade (200) in a rear row blade is positioned between the rear of a second end part (200) of a blade (200) in a front row and the rear of a second end part (2020) of another blade (200) in the front row, based on the air inflow direction.

14. The eliminator according to any one of claims 1 to 13, wherein a collecting member (300) is provided on the outer surface of the guide part (230) of each blade to filter moisture from the air passing between the blades (200), and
wherein optionally the collecting member (300) is positioned at a rear of the first end part (210) of another adjacent blade (200), based on the air inflow direction.

15. A blade for an eliminator according to any one of claims 1 to 13,
wherein the blade (200) comprises:
a first end part (210) that is configured to guide an inflow of air;
a second end part (220) that is configured to guide an outflow of air, and,
a guide part (230) that connects the first end part (210) and the second end part (220),
wherein the second end part (220) is positioned on a line different from the first end part (220) based on the air inflow direction, when viewed in a plan view.

## Amended claims

### Amended claims in accordance with Rule 137(2) EPC.

1. An eliminator comprising:
a first cover (101) and a second cover (101) that are provided to be spaced apart from each other while facing each other;
a plurality of blades (200) provided between the first cover (101) and the second cover (102) to be spaced apart from each other,
wherein each blade (200) of the plurality of the blades (200) includes:
a first end part (210) that is configured to guide an inflow of air;
a second end part (220) that is configured to guide an outflow of air, and,
a guide part (230) that connects the first end part (210) and the second end part (220),
wherein the second end part (220) is positioned on a line different from the first end part (220) based on a direction in which the first cover (101) and the second cover (101) face each other, when viewed in a plan view,
**characterized in that**,
the interval between the first end parts (210) and the interval between the second end parts (220) of each of the blades are equal, and
the guide part (230) of each blade is formed to be gradually adjacent to the guide part (230) of another adjacent blade from the first end part (210) to the second end part (220), and then gradually moves away from the guide part (230) of the adjacent blade while passing through a bent portion.

2. The eliminator according to claim 1, wherein the guide part (230) is formed to have a curved surface.

3. The eliminator according to claim 1 or claim 2, wherein the second end part (220) of the blade (200) is bent from the guide part (230) so that the air flows out in the same direction as the air inflow direction.

4. The eliminator according to any one of claims 1 to 3, wherein the first end part (210) and the second end part (220) of the blade (200) are formed to guide the air flow in the same direction.

5. The eliminator according to any one of claims 1 to 4, wherein the second end part (220) of the blade (200) is positioned at the rear of respective first end parts of other adjacent blades, based on the air inflow direction

6. The eliminator according to any one of claims 1 to 4, wherein the second end part (220) of the blade (200) is positioned between the rear of a first end part of the corresponding blade and the rear of a first end part of another adjacent blade, based on the air inflow direction.

7. The eliminator according to any one of claims 1 to 6, wherein a first coupling member (211) coupled to each cover (101, 102) is formed at the first end part (210) of the blade (200) while being bent in a direction opposite to the extending direction of the first end part (210), and
wherein a second coupling member (221) coupled to each cover (101, 102) is formed at the second end part (220) of the blade (200) while being bent in a direction opposite to the extending direction of the second end part (220).

8. The eliminator according to claim 7, wherein the first and second coupling members (211, 221) are formed by bending in the same direction from each respective end part of the blade (200).

9. The eliminator according to any one of claims 1 to 8, wherein the blade (200) is arranged to form a plurality of rows along the air flow direction.

10. The eliminator of claim 9, wherein among the blades (200) in each row, a first end part (210) of a blade (200) in a rear row is positioned at the rear of a second end part (220) of a blade (200) in a front row, based on the air inflow direction.

11. The eliminator of claim 9, wherein among the blades (200) in each row, a second end part (220) of a blade (200) in a rear row is positioned at the rear of a first end part (210) of a blade (200) in the front row, based on the air inflow direction.

12. The eliminator of claim 9, wherein among the blades (200) in each row, a second end part (220) of a blade (200) in a rear row is positioned between the rear of a first end part (210) of a blade (200) in a front row and the rear of a first end part (210) of another blade in the front row, based on the air inflow direction.

13. The eliminator of claim 9, wherein among the blades (200) in each row, a first end part (210) of a blade (200) in a rear row blade is positioned between the rear of a second end part (200) of a blade (200) in a front row and the rear of a second end part (2020) of another blade (200) in the front row, based on the air inflow direction.

14. The eliminator according to any one of claims 1 to 13, wherein a collecting member (300) is provided on the outer surface of the guide part (230) of each blade to filter moisture from the air passing between the blades (200), and
wherein optionally the collecting member (300) is positioned at a rear of the first end part (210) of another adjacent blade (200), based on the air inflow direction.

15. A blade for an eliminator according to any one of claims 1 to 13,
wherein the blade (200) comprises:
a first end part (210) that is configured to guide an inflow of air;
a second end part (220) that is configured to guide an outflow of air, and,
a guide part (230) that connects the first end part (210) and the second end part (220),
wherein the second end part (220) is positioned on a line different from the first end part (220) based on a direction in which the first cover (101) and the second cover (101) face each other, when viewed in a plan view,
**characterized in that**,
the interval between the first end parts (210) and the interval between the second end parts (220) of each of the blades are equal, and
the guide part (230) of each blade is formed to be gradually adjacent to the guide part (230) of another adjacent blade from the first end part (210) to the second end part (220), and then gradually moves away from the guide part (230) of the adjacent blade while passing through a bent portion.
